(19) **Europäisches Patentamt / European Patent Office / Office européen des brevets**

(11) **EP 1 073 210 B1**

(12) # FASCICULE DE BREVET EUROPEEN

(45) Date de publication et mention de la délivrance du brevet:
**14.03.2007 Bulletin 2007/11**

(51) Int Cl.:
***H04B 1/707*** *(2006.01)*

(21) Numéro de dépôt: **00202640.9**

(22) Date de dépôt: **21.07.2000**

(54) **Appareil de transmission de données par étalement de spectre comportant un récepteur de données**

Vorrichtung zur Spreizspektrumdatenübertragung mit einem Datenempfänger

Apparatus for spread spectrum data transmission comprising a data receiver

(84) Etats contractants désignés:
**DE FR GB IT**

(30) Priorité: **30.07.1999 FR 9909925**

(43) Date de publication de la demande:
**31.01.2001 Bulletin 2001/05**

(73) Titulaire: **Koninklijke Philips Electronics N.V.**
**5621 BA Eindhoven (NL)**

(72) Inventeur: **Marzouki, Abdelwaheb**
**75008 Paris (FR)**

(74) Mandataire: **Pennings, Johannes et al**
**NXP Semiconductors**
**Intellectual Property Department**
**High Tech Campus 60**
**5656 AG Eindhoven (NL)**

(56) Documents cités:
**EP-A- 0 563 020    EP-A- 0 689 302**

- **NAMBIAR R ET AL: "Iterative weighted interference cancellation for CDMA systems with RAKE reception" 1999 IEEE 49TH VEHICULAR TECHNOLOGY CONFERENCE (CAT. NO. 99CH36363), 1999 IEEE 49TH VEHICULAR TECHNOLOGY CONFERENCE. MOVING INTO A NEW MILLENIUM, HOUSTON, TX, USA, 16-20 MAY 1999, pages 1232-1236 vol.2, XP002132863 1999, Piscataway, NJ, USA, IEEE, USA ISBN: 0-7803-5565-2**
- **KO J H ET AL: "SYMBOL-BY-SYMBOL BASED ADAPTIVE INTERFERENCE CANCELLER FOR ASYNCHRONOUS DS/CDMA SYSTEMS IN MULTIPATH FADING CHANNELS" ELECTRONICS LETTERS,GB,IEE STEVENAGE, vol. 33, no. 24, 20 novembre 1997 (1997-11-20), pages 2023-2024, XP000734292 ISSN: 0013-5194**

**Description**

La présente invention concerne un appareil de transmission de données par étalement de spectre comportant un récepteur de données pour recevoir des données organisées en symboles de durée $T_5$ et étalées au moyen d'un code d'étalement de période $T_c$ avant d'emprunter un canal de transmission présentant L trajets principaux de propagation apportant, chacun, des retards, récepteur comportant :

- un circuit de réception, dit de Rake, formé de « L » branches pour traiter des données relatives à un retard de trajet pour fournir des symboles à décider,
- un circuit d'estimation des symboles reçus pour fournir des symboles estimés à l'utilisateur.

L'invention concerne aussi un procédé pour traiter des données présentant un étalement de spectre.

De tels appareils sont bien connus et trouvent de nombreuses applications, notamment dans le domaine des appareils de téléphonie portable. On pourra consulter à ce sujet la demande de brevet Européenne EP 0 851 600. Cet appareil connu comporte un récepteur qui combine des signaux retardés par un temps symbole, ou plus, en vue de diminuer l'influence des interférences qui se produisent sur des périodes de temps qui excèdent ce temps symbole.

Il est connu du document D1 :

« Iterative weighted interference cancellation for CDMA system with RAKE reception » de NAMBIAR et al., 16-26 May 1999 ; pp.1232-1236, vol.2, XP002132863 1999, Piscataway ? NJ, USA, IEEE USA ISBN :0-7803-5565-2 un appareil du genre ci-dessus qui tient compte principalement des contributions des données provenant d'autres utilisateurs que celui dudit appareil.

De même le document D2 :

« Symbol-by-symbol based adaptive interference canceller for asynchronous DS/CDMA systems in multipath fading channels » de KO J.H. et al., Electronics Letters, GB, IEE Stevenage, vol. 33, n°24,20 Novembre 1997, p.2023-2024 fait intervenir la contribution des autres utilisateurs, qu'il faut supprimer pour les données à fournir à l'utilisateur dudit appareil.

Tous ces appareils ne sont pas efficaces pour éliminer des interférences provenant de temps de décalage excédant plusieurs fois la durée d'un symbole. »

La présente invention propose d'éliminer les interférences se produisant sur des durées qui excèdent plusieurs fois ce temps symbole mais en utilisant d'autres méthodes.

Pour cela, un tel récepteur est remarquable en ce qu'il comporte, en outre, un circuit d'annulation d'interférences (25) à longue durée portant sur plusieurs $T_s$ comportant des moyens pour contenir des symboles estimés et des moyens de calculs pour estimer les interférences et un circuit de soustraction pour supprimer des symboles à estimer, la contribution des interférences.

La description suivante, faite en regard des dessins ci-annexés, le tout donné à titre d'exemple non limitatif, fera bien comprendre comment invention peut être réalisée.

La figure 1 montre un récepteur conforme à l'invention.
La figure 2 est un diagramme temps explicitant les temps symbole et la durée de l'élément d'étalement.
La figure 3 montre plus en détail le récepteur conforme à l'invention.
La figure 4 montre en détail la structure du circuit d'annulation d'interférence contenu dans le récepteur de la figure 3.

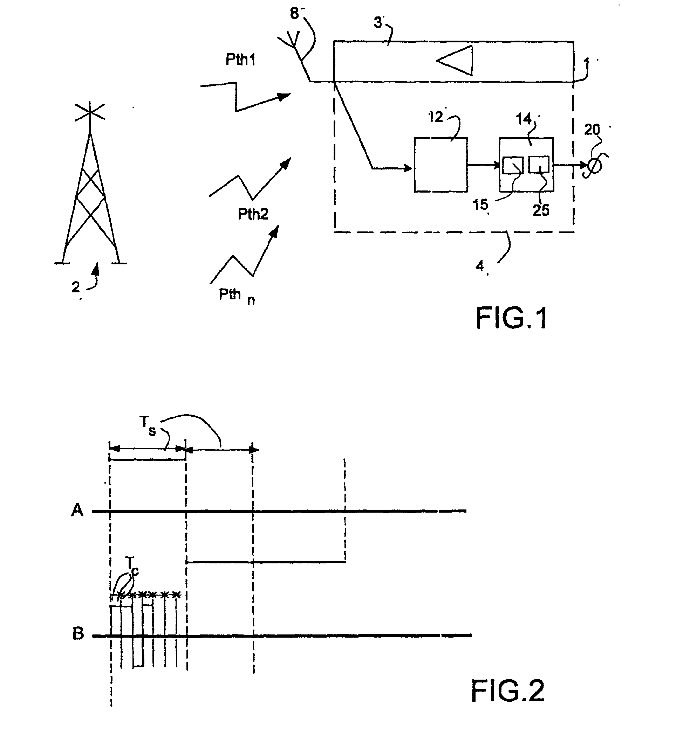

A la figure 1, on a représenté un appareil de transmission 1 coopérant avec une station de base 2 qui émet, en utilisant la modulation QPSK (Quadrature Phase Shift Key) des données sous forme complexe selon le procédé CDMA. Cet appareil est formé d'un émetteur de données 3 et d'un récepteur de données 4 utilisant en commun une antenne 8.

Le récepteur 4 comprend, notamment un démodulateur 12 qui démodule, après traitement, les données recueillies à partir de l'antenne 8 et un organe de traitement de données 14 incorporant un circuit de réception de Rake référencé par 15. Ce circuit permet d'améliorer la réception pour des liaisons radioélectriques se produisant selon plusieurs trajets Pth1, Pth2,...Pth$_n$ de sorte que les données $d_{-k}$ disponibles à la borne 20 soient de la meilleure qualité possible.

Selon l'invention on a prévu, en outre, dans ce récepteur un circuit d'annulation d'interférences portant la référence 25.

A la figure 2, la ligne A montre un symbole à émettre que l'on a représenté, pour des raison de facilité, à deux états. $T_S$ est la durée de ce symbole. Ce symbole subit une modulation par un code d'étalement de spectre dont chaque élément a une durée $T_C$. Le rapport $T_S / T_C$ donne le facteur d'étalement du spectre. Ce code d'étalement est formé en fait d'un premier code $C_{sp}$ plus spécifique à l'utilisateur et d'un deuxième $C_{SC}$ qui est relatif à la station de base qui l'émet. Ainsi ce code d'étalement composite permet de retrouver, au moyen de corrélations, les symboles émis au niveau du récepteur.

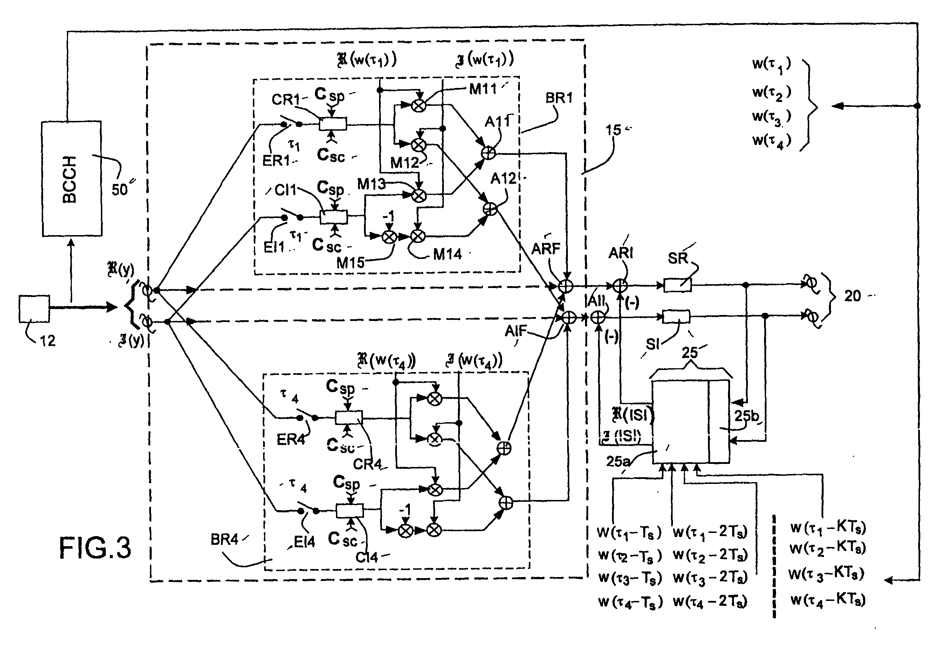

La figure 3 montre plus en détail le récepteur de l'invention. Il se compose d'un circuit de réception de Rake 15 recevant un signal complexe y(t), formé de quatre branches, par exemple, BR1 à BR4 pour traiter les signaux provenant de différents trajets amenant respectivement des retards $\tau_1$ à $\tau_4$ Ces branches comportent respectivement un échantillonneur ER1 à ER4 qui échantillonne la partie réelle du signal reçu $\Re$(y) à la fréquence $1/T_C$ et un autre échantillonneur EI1 à EI4 pour la partie imaginaire de ce signal $\Im$(y). Le temps d'échantillonnage de ces différents échantillonneurs est décalé des temps $\tau_1$ à $\tau_4$ pour chacune des branches. Un corrélateur CR1 à CR4 effectue la corrélation de la partie réelle du signal échantillonné par les différents échantillonneurs ER1 à ER4 avec le code d'étalement de spectre formé des parties $C_{SP}$ et $C_{SC}$ élaborées localement. Un corrélateur CI1 à CI4 effectue ces mêmes corrélation pour les parties imaginaires de ce signal reçu. Le signal à la sortie de ces corrélateur est corrigé par l'estimation du canal utilisé. Cette estimation basée sur l'élaboration de la réponse en impulsion du canal est effectuée par un estimateur de canal 50. Ce genre d'estimateur fait partie de l'état de la technique et on pourra en trouver une description dans l'article de R. PRICE et P.E. GREEN, intitulé :

"A Communication Technique for Multipath Channels" paru dans Proceedings of IRE, vol.46, Mars 1958. Notamment cette estimation est élaborée à partir d'un canal dit canal BCCH (voir normes UMTS). Différents multiplieurs M11, M12, M13, M14 et M15 (ce dernier, par sa multiplication par -1, donne la partie conjuguée du signal de sortie de l'ensemble des corrélateurs CR1 et CI1) permettent de modifier l'amplitude et la phase des signaux en sortie des corrélateurs CR1 et CI1 ; il en sera de même pour les autres branches. Les additionneurs A11 et A12 fournissent finalement le signal corrigé. Les additionneurs ARF et AIF fournissent, eux, la combinaison des signaux traités par les différentes branches du circuit.

Conformément à l'invention, avant d'appliquer ces signaux aux circuits de décision SR et SI, on soustrait, par des additionneurs ARI et AII la contribution des interférences qui sont évaluées par le circuit d'annulation d'interférences 25.

Ce circuit 25 comporte une partie 25a plutôt relative aux calculs et une partie 25b destinée à mémoriser les différentes données estimées par les circuits de décision SR et SI qui constituent ainsi un circuit d'estimation de symboles reçus, et rendues disponibles à la borne 20. Les circuits de calculs utilisent donc ces différentes données mémorisées et aussi différents échantillons de l'estimation du canal fournies par l'estimateur 50.

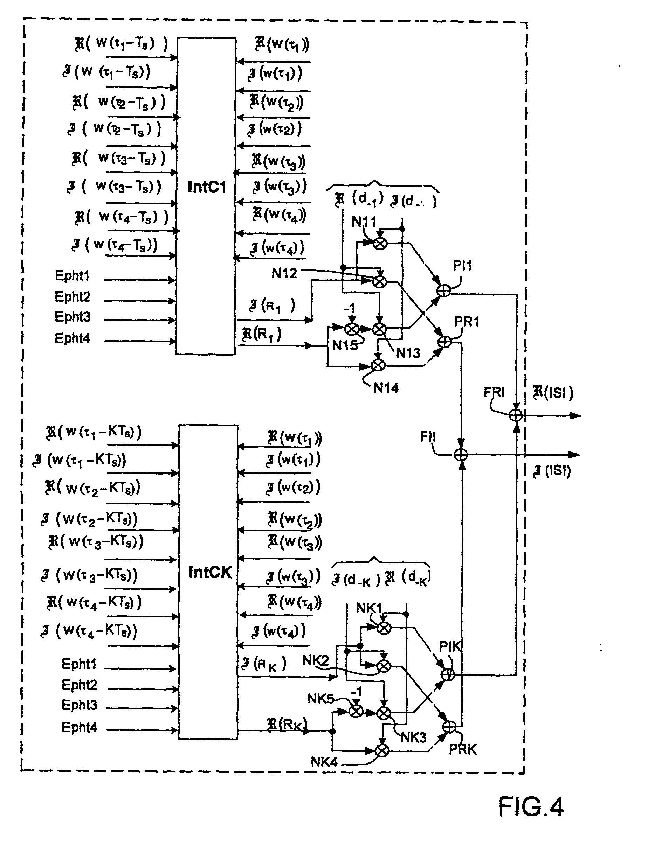

La figure 4 montre la structure du circuit d'annuation 25. Ce circuit est formé de K blocs d'intercorrélation IntC1 à IntCK, K définissant le temps durant lequel les interférences peuvent être supprimées. Ces blocs reçoivent des signaux Epht1 à Epht4 qui valident ou pas la contribution des branches BR1 à BR4 affectées aux trajets Pht1 à Pht4. Différents multiplieurs N11 à N15, pour le bloc IntC1 effectuent, en coopération avec des additionneurs PR1 et PI1, des opérations similaires aux précédentes mais relativement aux données décidées $d_{-1}$, jusqu'à $d_{-K}$ pour le bloc IntCK. Deux additionneurs FRI et FII combinent la contribution de tous les blocs pour fournir les signaux d'interférences calculées $\Re$(ISI) et $\Im$(ISI).

Les différents calculs effectués par ces blocs vont être explicités par les considérations suivantes :

Dans les communications utilisant la propagation radioélectrique le canal de transmission se décompose en L trajets amenant chacun, d'une part, un retard de $\tau_1$ et, d'autre part, une rotation de phase $\varphi_1$ et une atténuation d'amplitude $\beta_1$ de sorte que le signal reçu y(t) émanant d'un signal émis s(t) va tenir compte de ces différentes perturbations et aussi du bruit n(t) et va donc s'écrire :

$$y(t) = \sum_{l=1}^{L} \beta_l . e^{j\varphi_l} s(t - \tau_l) + n(t) \qquad (1)$$

Le signal s(t) représente des données $d_k$ qui subissent un étalement défini par un code d'étalement $C(t-k.T_S)$ où $T_S$ représente la durée du symbole transmis. Ce code est formé par des valeurs $C_j$ de sorte que l'on peut donc écrire:

$$C(t) = \sum_{j=0}^{j=K-1} C_j \delta(t - jT_c) \qquad (4)$$

où $T_C$ représente la durée de l'élément du code d'élément et K le nombre de ces éléments de code d'étalement. On peut aussi écrire : $T_s = KT_c$. Le signal x(t) peut s'écrire alors :

$$y(t) = \sum_{l=1}^{L} \beta_1 . e^{j\varphi_1} . \sum_{k=-\infty}^{k=+\infty} d_{-k} . C(t - \tau_1 - kT_s) + n(t) \qquad (5)$$

Chaque branche du récepteur de Rake effectue une corrélation, le signal $r(\tau_1)$ de sortie de ces branche s'écrit alors:

$$r(\tau_1) = \sum_{k=-\infty}^{k=+\infty} d_{-k} . w(\tau_1 - kT_s) + \eta(\tau_1) \qquad (6)$$

$w(\tau_1 + kT_S)$ est la réponse en impulsions du canal, au temps indiqué dans la parenthèse. On décompose ce signal en deux parties : un signal utile $r_{us}$ et un signal de traîne $r_{ps}$, ce que l'on peut écrire:

$$r_{us}(\tau_1) = d_0 . w(\tau_1) \qquad (7a)$$

$$r_{ps}(\tau_1) = \sum_{k \neq 0} d_k w(\tau_1 + kT_s) \qquad (7b)$$

Comme les retards $\tau_1$ sont choisis dans l'intervalle de temps [0, $T_S$], ce qui implique donc que, seuls, les symboles passés seront pris en compte, l'équation (6) se reécrit :

$$r(\tau_1) = \sum_{k=0}^{k=K} d_{-k} . w(\tau_1 - kT_s) + \eta(\tau_1) \qquad (9)$$

K est choisi tel que $KT_c \leq \tau_L$

$\tau_L$ représente le temps le plus long qui, en fait, n'est pas fixe puisqu'il dépend de l'environnement physique. On peut juste dire qu'il peut varier d'une fraction de sumboles à plusieurs symboles.

Selon certaines normes (UMTS, notamment) $\tau_L$ est supposé être égal à 256 $T_c$ d'où le facteur K:

$$K = \frac{256.T_c}{SF.TC} = \frac{256}{SF} \qquad (10)$$

SF est le facteur d'étalement que l'on peut prendre dans la fourchette allant de 4 à 256. Il est à noter que la durée d'un symbole $T_s$ pour l'information que l'on ne connaît pas a priori, peut varier de 4 à 256 SF et que la durée d'un symbole d'un canal pilote que l'on utilise pour estimer les retards dus aux trajets est fixe (elle est égale à 256 dans le cas de l'UMTS et à 128 dans l'IS95).

A partir de la formule (9), on peut faire apparaître la partie r'(t) débarrassée des interférences apportées par des données déjà transmises.

$$r'(t) = r(\tau_1) - \sum_{k=0}^{k=K} d_k . w(\tau_1 + kT_s) + = d_0 w(\tau_1) + \eta(\tau_1) \qquad (11)$$

$d_0$ est le symbole que l'on veut estimer et $d_{-1}$ $d_{-2}$,..., $cl_{-k}$ sont des symboles passés déjà estimés.

Le signal Z à la sortie des additionneurs ARI et AII, résultant de la combinaison des différentes branches du récepteur de Rake et du circuit 25 s'écrit:

$$Z = \sum_{l=1}^{l=L} w^*(\tau_1).r(\tau_1) - \sum_{k=1}^{k=K} d_{-k}.(\sum_{l=1}^{l=L} w^*(\tau_1).w(\tau_1 - kT_s) \qquad (12)$$

$$Z = \sum_{l=1}^{l=L} w^*(\tau_1).r(\tau_1) - \sum_{k=1}^{k=K} d_{-k}.R_k . \qquad (13)$$

où

$$R_k = \sum_{l=1}^{l=L} w^*(\tau_1).w(\tau_1 - kT_s) \qquad (14)$$

Les blocs Intck effectuent les calculs indiqués par cette formule (14).

Les différents multiplicateurs N11,..N15 jusqu'à NK1,.. NK5 effectuent les opérations situées après le signe moins de l'équation (11). Cette formule (14) montre que l'on effectue une intercorrélation de la réponse en impulsion du canal limitée à $[0, T_S]$ et de la réponse en impulsion en dehors de cet intervalle $[0, T_S]$.

## Revendications

**1.** Appareil de transmission de données par étalement de spectre comportant un récepteur de données pour recevoir des données organisées en symboles de durée $T_s$ et étalées au moyen d'un code d'étalement de période $T_c$ avant d'emprunter un canal de transmission présentant L trajets principaux de propagation apportant, chacun, des retards, récepteur comportant :

- un circuit de réception, dit de Rake (15), formé de « L » branches pour traiter des données relatives à un retard de trajet pour fournir des symboles à décider,
- un circuit d'estimation (SR, SI) des symboles reçus pour fournir des symboles estimés à l'utilisateur,

**caractérisé en ce qu'**il comporte, en outre, un circuit d'annulation d'interférences (25) à longue durée portant sur plusieurs $T_s$ comportant des moyens pour contenir des symboles estimés, des moyens de calculs pour estimer les interférences et un circuit de soustraction pour supprimer des symboles à estimer, la contribution des interférences.

**2.** Appareil selon la revendication 1 **caractérisé en ce que** le circuit d'annulation d'interférences **(25)** comporte des entrées pour recevoir:

- le nombre « L »,
- le facteur d'étalement : $T_S / T_C$
- des coefficients d'estimation du canal de transmission w(...) fournis par un estimateur de canal,
- « K » symboles déjà estimés.

et une sortie pour supprimer les interférences estimées à l'entrée du circuit d'estimation.

**3.** Appareil selon la revendication 2 **caractérisé en ce que** le circuit d'annulation effectue les opérations suivantes:

$$\sum_{k=1}^{k=K}\mathrm{d}_{-k}.(\sum_{l=1}^{l=L}\mathrm{w}^{*}(\tau_{1}).\mathrm{w}(\tau_{l}-kT_{s}))$$

où w(..) représente ladite estimation du canal et w*(..) son conjugué,
$d_{-k}$ les symboles déjà estimés.

**4.** Appareil selon la revendication 3, **caractérisé en ce que** l'estimateur de canal opère sur des informations provenant d'un canal dit canal BCCH.

**5.** Procédé mis en oeuvre dans un récepteur selon l'une des revendications 1 à 4, procédé dans lequel on effectue:

- une réception des signaux au moyen d'un récepteur de Rake
- une estimation du canal de propagation,
- une décision pour fournir des symboles décidés,

et **caractérisé en ce qu'**on effectue:

- une mémorisation des symboles estimés,
- une annulation des interférences sur une durée qui peut excéder des durées symboles, interférences calculées par des intercorrélations effectuées sur l'estimation du canal et sur des symboles décidés.

**Claims**

**1.** An apparatus for spread spectrum data transmission comprising a data receiver for receiving data organized in symbols of duration $T_s$ and spread by means of a spreading code having period $T_c$ before a transmission channel is borrowed which channel has L main broadcasting paths each producing delays, which receiver comprises:

- a receiving circuit called Rake circuit (15) formed by «L» branches for processing data relating to a path delay so as to produce decision symbols,
- an estimation circuit (SR, ST) for the received symbols so as to supply estimated symbols to the user,

**characterized in that** the receiver further includes a long-term interference canceling circuit (25) covering various $T_s$, which circuit comprises means for containing estimated symbols, calculation means for estimating the interference and a subtracting circuit for removing symbols to estimate the contribution of interference.

**2.** An apparatus as claimed in claim 1, **characterized in that** the interference canceling circuit (25) has inputs for receiving:

- the number «L»
- the spreading factor: $T_s/T_c$
- estimation coefficients of the transmission channel w(..) produced by a channel estimator,
- «K» already estimated symbols,

and an output for removing the estimated interference at the input of the estimation circuit.

**3.** An apparatus as claimed in claim 2, **characterized in that** the canceling circuit performs the following operations:

$$\sum_{k=1}^{k=K}\mathrm{d}_{-k}.(\sum_{l=1}^{l=L}\mathrm{w}^{*}(\tau_{1}).\mathrm{w}(\tau_{l}-kT_{s}))$$

where w(..) represents said channel estimation and w*(..) its conjugate,
$d_{-k}$ are the already estimated symbols.

**4.** An apparatus as claimed in claim 3, **characterized in that** the channel estimator acts on information coming from a channel called BCCH.

**5.** A method implemented in a receiver in accordance with one of the claims 1 to 4, in which method is effected:

    - a reception of the signals by means of a Rake receiver,
    - an estimation of the broadcast channel,
    - a decision for producing decided symbols,

and **characterized in that** there is effected:

    - a storage of the estimated symbols,
    - a cancellation of the interference for a duration that may exceed symbol durations, interference calculated via intercorrelations effected with respect to the channel estimation and to the decided symbols.

**Patentansprüche**

**1.** Vorrichtung zur Spreizspektrumdatenübertragung mit einem Datenempfänger, um Daten zu empfangen, die in Symbolen der Dauer $T_S$ organisiert sind und durch einen Spreizcode der Dauer $T_C$ gespreizt werden, bevor sie einen Übertragungskanal benutzen, der L Hauptausbreitungswege aufweist, die alle Verzögerungen bewirken, wobei der Empfänger umfasst:

    - eine Empfangsschaltung, Rake-Schaltung genannt (15), die aus "L" Zweigen geformt ist, um Daten in Bezug auf eine Wegverzögerung zu verarbeiten, um Symbole für eine Entscheidung auszugeben,
    - eine Schätzschaltung (SR, SI), für die empfangenen Symbole, um geschätzte Symbole an den Benutzer auszugeben,

**dadurch gekennzeichnet, dass** er außerdem eine Schaltung zur Beseitigung von Interferenzen (25) mit langer Dauer umfasst, die über mehrere $T_S$ hinweg anhalten, umfassend Mittel zum Speichern von geschätzten Symbolen, Berechnungsmittel zum Schätzen der Interferenzen und eine Subtraktionsschaltung, um von den zu schätzenden Symbolen den Beitrag der Interferenzen abzuziehen.

**2.** Vorrichtung nach Anspruch 1, **dadurch gekennzeichnet, dass** die Schaltung zur Interferenzbeseitigung (25) Eingänge umfasst, um zu empfangen:

    - die Zahl "L",
    - den Spreizfaktor $T_S/T_C$
    - die Schätzkoeffizienten des Übertragungskanals w(...), die von einem Kanalschätzer ausgegeben werden,
    - "K" Symbole, die bereits geschätzt wurden,

und einen Ausgang, um die am Eingang der Schätzschaltung geschätzten Interferenzen zu beseitigen.

**3.** Vorrichtung nach Anspruch 2, **dadurch gekennzeichnet, dass** die Schaltung zur Interferenzbeseitigung die folgenden Operationen durchführt:

$$\sum_{k=1}^{k=K} d_{-k}.\left(\sum_{l=1}^{l=L} w_*(\tau_l).w(\tau_l - kT_s)\right)$$

wobei w(..) die Kanalschätzung und w*(..) ihr Konjugat darstellt,
$d_{-k}$ die bereits geschätzten Symbole sind.

**4.** Vorrichtung nach Anspruch 3, **dadurch gekennzeichnet, dass** der Kanalschätzer Informationen verarbeitet, die von einem sogenannten BCCH-Kanal kommen.

**5.** Verfahren, das in einem Empfänger nach einem der Ansprüche 1 bis 4 implementiert wird, wobei in diesem Verfahren durchgeführt wird:

- ein Empfang der Signale mit Hilfe eines Rake-Empfängers,
- eine Schätzung des Ausbreitungskanals,
- eine Entscheidung, um entschiedene Symbole zu erhalten,

und **dadurch gekennzeichnet, dass** durchgeführt wird:

- eine Speicherung der geschätzten Symbole,
- eine Beseitigung der Interferenzen über eine Dauer hinweg, die die Symboldauern übersteigen kann, wobei die Interferenzen anhand von Interkorrelationen berechnet werden, die in Bezug auf die Kanalschätzung und auf die entschiedenen Symbole hergestellt wurden.

**FIG.1**

**FIG.2**

FIG.3

FIG.4